# EUROPÄISCHE PATENTSCHRIFT

(11) **EP 3 463 997 B1**
(45) Veröffentlichungstag und Bekanntmachung des Hinweises auf die Patenterteilung: **17.08.2022**
(21) Anmeldenummer: 17715401.0
(22) Anmeldetag: 03.04.2017
(51) Int. Cl.: B60T 8/1766, B60T 8/17, B60T 8/32

(54) **REGELUNGSEINHEIT, ACHSMODULATOR UND BREMSSYSTEM**
OPEN-LOOP CONTROL UNIT, AXLE MODULATOR AND BRAKING SYSTEM
UNITÉ DE RÉGULATION, MODULATEUR D'ESSIEU ET SYSTÈME DE FREINAGE

(30) Priorität: 02.06.2016 DE 102016006763
(43) Veröffentlichungstag der Anmeldung: 10.04.2019
(73) Patentinhaber: ZF CV Systems Europe BV, 1170 Brussels (BE)
(72) Erfinder: MICHAELSEN, Arne, 30926 Seelze (DE)
(74) Vertreter: Rabe, Dirk-Heinrich
(86) Internationale Anmeldenummer: PCT/EP2017/000407
(87) Internationale Veröffentlichungsnummer: WO 2017/207077

(56) Entgegenhaltungen:
- EP-A2- 1 712 378
- WO-A1-00/23305
- US-A1- 2004 075 450
- US-A1- 2013 184 957
- US-A1- 2015 175 138
- US-B1- 7 099 795

## Beschreibung

Die Erfindung betrifft einen Achsmodulator gemäß dem Oberbegriff des Anspruchs 1. Des Weiteren betrifft die Erfindung ein Bremssystem mit wenigstens einem Bremssteuergerät und mit wenigstens einem Achsmodulator gemäß dem Anspruch 6.

Elektronische Bremssysteme (EBS) für Fahrzeuge werden in unterschiedlichen Varianten hergestellt. Insbesondere für den Einsatz in schweren Fahrzeugen, wie Lastkraftwagen, Bussen und Ähnlichem, werden typischerweise pneumatische Bremssysteme eingesetzt. Zur Ansteuerung der einzelnen Bremszylinder an den Rädern sind dabei typischerweise sogenannte Achsmodulatoren (AxM) vorgesehen. Diese dienen dazu, den Bremszylinderdruck auf beiden Seiten in Form der jeweiligen Räder einer Achse oder mehrerer Achsen zu regeln. Hierzu verfügt der Achsmodulator für eine Achse typischerweise über zwei pneumatisch unabhängige Druckregelkreise mit jeweils einem Belüftungs- und Entlüftungsventil, jeweils einem Bremsdrucksensor und einer gemeinsamen Regelelektronik in Form einer Regelungseinheit.

Aus der US 2013/184957 A1 und der US 2004/075450 A1 sind Achsmodulatoren bzw. Drehzahlsensoren bekannt.

Der Achsmodulator erfasst über Drehzahlsensoren, insbesondere Raddrehzahlsensoren, die Umdrehungsgeschwindigkeiten der Räder, wertet sie aus und sendet sie an ein Bremssteuergerät als Zentralmodul, das daraufhin die Solldrücke ermittelt. Die Berechnung kann gegebenenfalls aber auch durch die Regelungseinheit des Achsmodulators erfolgen. Dabei existieren mit einerseits passiven und andererseits aktiven Sensortypen unterschiedliche Varianten der Drehzahlsensoren. Diese erfordern eine unterschiedliche Ansteuerung und Auswertung.

Zumindest die Regelung des Antiblockiersystems (ABS) nimmt der Achsmodulator in der Regel selbstständig vor, indem beispielsweise bei Blockier- oder Durchdrehneigung wenigstens eines Rades der vorgegebene Solldruck modifiziert wird. Hierzu ist die beschriebene Erfassung der Raddrehzahlen erforderlich.

Neben den Drehzahlsensoren sind typischerweise zusätzlich noch Bremsbelagverschleißsensoren zur Erfassung des Zustandes der Bremsbeläge vorgesehen. Die können sowohl als Schwellwertsensoren zur Erfassung eines maximalen Verschleißes oder auch zur kontinuierlichen Erfassung des Zustandes der Bremsbeläge ausgebildet sein.

Zur Durchführung der Regelungsaufgaben weist der Achsmodulator die oben angesprochene Regelungseinheit auf. Diese Regelungseinheit nimmt insbesondere die beschriebenen Erfassungen von Messwerten und die Regelungsaufgaben wahr.

Nachteilig an den bekannten Regelungseinheiten beziehungsweise Achsmodulatoren ist, dass je nach verwendetem Drehzahlsensor unterschiedliche Achsmodulatoren beziehungsweise Regelungseinheiten für Achsmodulatoren eingesetzt werden müssen. Dies liegt daran, dass die Ansteuerung und Auswertung einerseits passiver und andererseits aktiver Drehzahlsensoren auf unterschiedliche Weise erfolgt. Daher müssen im Stand der Technik beim Hersteller der Bremssysteme zu diesem Zweck unterschiedliche Varianten des Achsmodulators beziehungsweise der Regelungseinheit vorgesehen werden, die einerseits aktive und andererseits passive Sensoren ansteuern und auslesen können. Andererseits ist auch beim Fahrzeughersteller bereits früh im Produktionsprozess eines Fahrzeugs eine Auswahl der Sensoren und damit des zugehörigen Achsmodulators beziehungsweise der Steuerungseinheit erforderlich. Dies führt an mehreren Stellen zu hohen Lagerungs- und Planungskosten.

Die Aufgabe der vorliegenden Erfindung besteht daher darin, einen Achsmodulator anzugeben, der die beschriebenen Nachteile beseitigt. Insbesondere soll ein derartiger Achsmodulator geeignet sein, in einem Gerät sowohl mit aktiven als auch mit passiven Drehzahlsensoren umzugehen.

Ein Achsmodulator mit den Merkmalen des Anspruchs 1 löst diese Aufgabe. Hierzu sind separate Anschlüsse für aktive Drehzahlsensoren einerseits und passive Drehzahlsensoren andererseits vorgesehen. Damit kann den Besonderheiten der beiden Drehzahlsensortypen bei Auslesen und Auswerten Rechnung getragen werden. Ein aktiver Drehzahlsensor lässt sich dementsprechend an einen Anschluss anschließen, während sich ein passiver Drehzahlsensor an einen anderen Anschluss anschließen lässt. Somit können an den Achsmodulator sowohl aktive wie auch passive Drehzahlsensoren angeschlossen werden. Ein derartiger Achsmodulator kann zur Regelung des Bremsdruckes an einer oder an beiden Seiten einer Achse ausgebildet sein. Vorzugsweise können dementsprechend separate Anschlüsse für zwei aktive Drehzahlsensoren einerseits und zwei passive Drehzahlsensoren andererseits vorgesehen sein. Vorzugsweise ist dabei je Seite sowohl ein Anschluss für einen aktiven als auch für einen passiven Drehzahlsensor vorgesehen. Somit lassen sich beide Seiten beziehungsweise Räder einer Achse gleichzeitig mittels eines Achsmodulators versorgen.

Besonders bevorzugt sind für jede Achse zwei Anschlüsse je Seite der Achse vorgesehen. Insbesondere ist dabei ein Anschluss für passive Drehzahlsensoren ausgebildet und ein anderer Anschluss für aktive Drehzahlsensoren. Dies bedeutet, dass jeder Seite und damit jedem Rad einer Achse zwei Anschlüsse zugeordnet sind. Dabei kann sowohl ein passiver Drehzahlsensor, als auch ein aktiver Drehzahlsensor je Seite der Achse vorgesehen sein.

Erfindungsgemäß sind aktive und passive Drehzahlsensoren alternativ zueinander anschließbar. Dies bedeutet, dass der Achsmodulator entweder aktive oder passive Drehzahlsensoren auslesen und ansteuern kann. Gegebenenfalls kann der Achsmodulator den Anschluss eines weiteren Drehzahlsensors an den zweiten, freien separaten Anschluss ignorieren. Alternativ ist auch eine Vorrangsregelung entweder des passiven oder des aktiven Drehzahlsensors möglich. In diesem Fall kann dann der jeweils nachrangige Drehzahlsensor vom Achsmodulator ignoriert werden beziehungsweise insbesondere nur im Fehlerfall aktiviert werden.

Weiter bevorzugt weist jeder der Anschlüsse zwei Kontakte, beziehungsweise zwei elektrische Leiter zum Anschluss eines Sensors auf. Vorzugsweise handelt es sich bei dem Sensor um einen Drehzahlsensor oder einen Bremsbelagverschleißsensor. Hiermit wird dem üblichen Zweidrahtanschluss für die Sensoren Rechnung getragen. Alternativ sind aber auch andere Anschlussarten beispielsweise mit einem Leiter und einer Rückführung über andere Fahrzeugbauteile, wie die Karosserie, oder auch eine Kontaktierung mit mehr als zwei Leitern denkbar, gegebenenfalls auch per Bussystem.

In einer bevorzugten Ausführung der Erfindung sind zwei aktive Drehzahlsensoren und zwei Bremsbelagverschleißsensoren gleichzeitig anschließbar. Diese sind für die beiden Seiten einer Achse vorgesehen, also insbesondre für zwei unabhängig voneinander drehbare Räder. Damit können gleichzeitig die Raddrehzahlen mittels aktiver Drehzahlsensoren und auch die Zustände der Bremsbeläge ausgewertet werden, vorzugsweise für mehrere Räder.

In einer alternativen Ausführung der Erfindung sind zwei passive Drehzahlsensoren und zwei Bremsbelagverschleißsensoren gleichzeitig anschließbar. Diese sind für die beiden Seiten einer Achse vorgesehen, also insbesondre für zwei unabhängig voneinander drehbare Räder. In diesem Fall können die Raddrehzahlen mittels passiver Drehzahlsensoren ausgewertet werden, während gleichzeitig der Zustand der Bremsbeläge feststellbar ist.

Erfindungsgemäß sind wenigstens zwei erste Anschlüsse und zwei zweite Anschlüsse zum Anschluss von Sensoren, insbesondere Drehzahlsensoren und/oder Bremsbelagverschleißsensoren, vorgesehen. Die ersten und zweiten Anschlüsse dienen einer entsprechenden Zuordnung und gezielten Anschluss der aktiven und passiven Drehzahlsensoren.

Erfindungsgemäß sind an die genannten ersten Anschlüsse zwei aktive Drehzahlsensoren und an die zweiten Anschlüsse zwei Bremsbelagverschleißsensoren anschließbar. Alternativ dazu sind zwei Bremsbelagverschleißsensoren an die ersten Anschlüsse und zwei passive Drehzahlsensoren an die zweiten Anschlüsse anschließbar. Dies bedeutet, dass eine Zuordnung der passiven und aktiven Drehzahlsensoren zu den konkreten Anschlüssen an der Regelungseinheit beziehungsweise am Achsmodulator erfolgt. Die Bremsbelagverschleißsensoren können an einen jeweils dedizierten Anschluss je Seite angeschlossen werden. Somit ist es insbesondere auf Seiten der Regelungseinheit nicht erforderlich, zwischen aktiven und passiven Drehzahlsensoren an einem einzigen Anschluss zu unterscheiden. Außerdem kann damit eine falsche Auswahl von Sensortypen verhindert werden, da an jeden der Anschlüsse jeweils nur einer der Sensortypen anschließbar ist. Weiter vorzugsweise können unterschiedliche ausgebildete Steckverbinder ein Vertauschen von passiven und aktiven Sensoren verhindern.

Die eingangs beschriebene Aufgabe wird schließlich auch gelöst durch ein Bremssystem mit den Merkmalen des Anspruchs 6. Dementsprechend weist das Bremssystem wenigstens ein Bremssteuergerät zur Steuerung auf. Darüber hinaus ist wenigstens eine Regelungseinheit vorgesehen, wie sie oben beschrieben ist. Diese Regelungseinheit kann Teil eines Achsmodulators sein, wie er oben beschrieben ist, beziehungsweise als separate Regelungseinheit mit geeigneten externen Komponenten ausgebildet sein. Es handelt sich insbesondere um ein pneumatisches Bremssystem.

Ein bevorzugtes Ausführungsbeispiel der Erfindung wird im Folgenden anhand der Zeichnung näher beschrieben. In dieser zeigen:
- Fig. 1: einen erfindungsgemäßen Achsmodulator mit angeschlossenen passiven Drehzahlsensoren, und

- Fig. 2: den Achsmodulator der Fig. 1 mit angeschlossenen aktiven Drehzahlsensoren, und
- Fig. 3: ein ausschnittsweises Schaltungsbeispiel eines erfindungsgemäßen Achsmodulators.

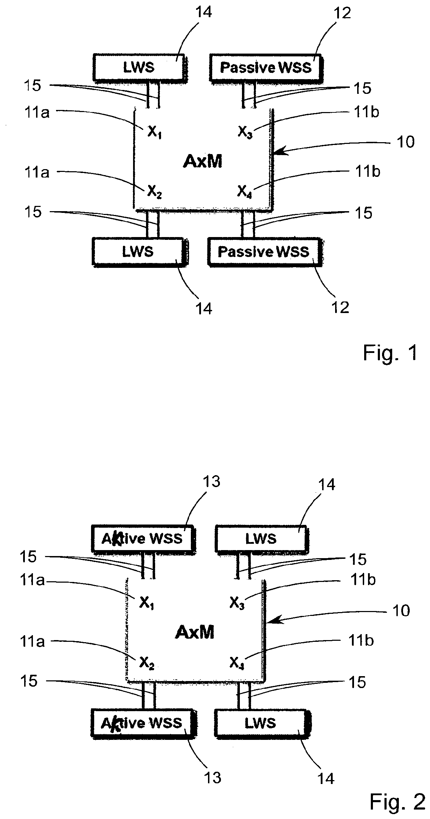

In den Fig. 1 und 2 ist beispielhaft ein erfindungsgemäßer Achsmodulator 10 gezeigt. Es handelt sich dabei um eine Blockdarstellung, bei der lediglich die erfindungswesentlichen Komponenten skizziert sind.

Da ein derartiger Achsmodulator 10 zur Regelung des Bremsdrucks entsprechender Bremszylinder einer Achse oder mehrerer Achsen vorgesehen ist, weist der Achsmodulator 10 typischerweise entsprechende Ventile beziehungsweise Ventilausgänge zur Ansteuerung mit Druckluft auf. Entsprechende Eingänge zur Zuführung der Druckluft sind ebenfalls hier nicht gezeigt. Die eigentliche Steuerung beziehungsweise Regelung des Achsmodulators 10 wird von einer integrierten Regelungseinheit vorgenommen. Es handelt sich dabei um ein hier ebenfalls nicht gezeigtes elektronisches Steuergerät, das die Auswertung der Sensordaten einerseits und die Berechnung der erforderlichen Bremsdrücke andererseits vornimmt. Darüber hinaus erfolgt auch die eigentliche Ansteuerung der Ventile zur Einstellung des Bremsdrucks in den Bremszylindern.

Da es sich bei den hier in Rede stehenden Achsmodulatoren 10 um für eine oder mehrere Achsen geeignete Einheiten handelt, erfolgt sowohl der Anschluss der Sensoren als auch der entsprechenden Ventile immer paarweise. Damit wird sichergestellt, dass beide Seiten einer Achse, also dementsprechend die Räder auf beiden Seiten der Achse von den entsprechenden Sensoren überwacht werden können und andererseits auf beiden Seiten der Achsen ein entsprechender Bremsdruck generiert werden kann. Die entsprechenden hydraulischen Bremssysteme werden von der zugeführten Druckluft gespeist und sorgen für eine geregelte Bremswirkung an dem jeweiligen Rad.

Gegebenenfalls können auch entsprechende Antirutsch-, Antiblockier- oder auch Antischlingervorrichtungen mittels des einzelnen Achsmodulators 10 umgesetzt werden. Die eigentliche Steuerung kann durch die in dem Achsmodulator 10 integrierte Steuerelektronik beziehungsweise Steuerungseinheit oder Regelungseinheit, vorgenommen werden. Alternativ können allerdings auch externe Komponenten zur Durchführung einzelner Regelungs- oder Steuerungsaufgaben vorgesehen sein. Hierzu sind sie entsprechend mit dem Achsmodulator 10 zu verbinden.

Der hier skizzenhaft gezeigte Achsmodulator 10 weist insgesamt vier Anschlüsse 11a, 11b auf. Diese Anschlüsse 11a und 11b sind zur Unterscheidung zusätzlich mit den Symbolen X₁, X₂, X₃ und X₄ bezeichnet. Sie dienen zum Anschluss von Sensoren an den Achsmodulator 10.

Dabei sind die beiden mit X₁ und X₃ bezeichneten Anschlüsse 11a, 11b für den Anschluss von Sensoren auf der einen Seite der Achse vorgesehen, also insbesondere eines ersten Rades. Die beiden mit X₂, und X₄ bezeichneten Anschlüsse 11a, 11b dienen zum Anschluss von Sensoren auf der anderen Seite der Achse vorgesehen, also insbesondere eines zweiten Rades.

In Fig. 1 ist der Achsmodulator 10 dementsprechend mit zwei passiven Drehzahlsensoren 12 versehen. Demgegenüber ist derselbe Achsmodulator 10 in der Fig. 2 mit zwei aktiven Drehzahlsensoren 13 ausgestattet. Bei den aktiven beziehungsweise passiven Drehzahlsensoren 12, 13 handelt es sich typischerweise um Raddrehzahlsensoren (Wheel Speed Sensor, WSS), die die aktuelle Umdrehungsgeschwindigkeit des zugeordneten Rades erfassen können. Dabei sind entweder aktiv messende Sensoren oder passiv messende Sensoren ebenso wie auch andere Varianten denkbar.

In beiden Fällen der Fig. 1 und 2 sind außerdem jeweils zwei Bremsbelagverschleißsensoren 14 an den Achsmodulator 10 angeschlossen. Diese dienen dazu, den Zustand der Bremsbeläge zu überwachen. Dies kann punktuell oder auch kontinuierlich erfolgen. Es lässt sich insbesondere ein bestimmter Maximalwert auswerten oder auch eine kontinuierliche Messung vornehmen. Dies ist abhängig davon, welche Messtechnik verwendet wird. Typischerweise wird dabei ein Maximalwert des Verschleißes des Bremsbelages erfasst werden, ab dem eine entsprechende Meldung an den Achsmodulator 10 erfolgt.

Der Anschluss der passiven Drehzahlsensoren 12 an den Achsmodulator 10 erfolgt hier erfindungsgemäß an die mit X₃ und X₄ bezeichneten Anschlüsse 11b. Umgekehrt sind die aktiven Drehzahlsensoren 13 der Fig. 2 an die mit X₁ und X₂ bezeichneten Anschlüsse 11a angeklemmt. Dies wird daher, dass der Achsmodulator 10 jeweils zwei zum Anschluss passiver Drehzahlsensoren 12 ausgestattete Anschlüsse 11a und gleichzeitig zwei zum Anschluss aktiver Drehzahlsensoren 13 ausgebildete weitere Anschlüsse 11b aufweist. Im gezeigten Ausführungsbeispiel können die passiven Drehzahlsensoren 12 an die mit X₃ und X₄ bezeichneten Anschlüsse 11b angeschlossen werden. Aktive Drehzahlsensoren 13 sind dagegen hier mit den mit X₁ und X₂ bezeichneten Anschlüsse 11a zu kontaktieren.

Typischerweise ist lediglich ein Paar Drehzahlsensoren 12, 13 an einen Achsmodulator 10 zur Messung beider Seiten einer Achse erforderlich. Hierzu sind entweder passive Drehzahlsensoren 12 oder aktive Drehzahlsensoren 13 angeschlossen.

Erfindungsgemäß sind alle Anschlüsse 11a, 11b des Achsmodulators 10 dazu ausgebildet, mit Bremsbelagverschleißsensoren 14 ausgestattet zu werden. Dementsprechend lassen sich derartige Sensoren 14 an allen Anschlüssen 11a, 11b auslesen.

Sobald ein Paar X₁ und X₂ oder X₃ und X₄ der Anschlüsse 11a beziehungsweise 11b bereits mit dem zugeordneten Drehzahlsensortyp ausgestattet ist, kann das jeweils freie Anschlusspaar X₃ und X₄ oder X₁ und X₂ der Anschlüsse 11b beziehungsweise 11a folglich mit Bremsbelagverschleißsensoren 14 ausgestattet werden. Konkret bedeutet dies, dass in der Fig. 1 die passiven Drehzahlsensoren 12 an die mit X₃ und X₄ bezeichneten Anschlüsse 11b angeschlossen sind. An die beiden durch X₁ und X₂ bezeichneten Anschlüsse 11a sind in diesem Fall Bremsbelagverschleißsensoren 14 angeschlossen.

Umgekehrt sind in der Fig. 2 an den Achsmodulator 10 zwei aktive Drehzahlsensoren 13 mit den mit X₁ und X₂ bezeichneten Anschlüsse 11a verbunden. Folglich ist an den beiden freien, mit X₃ und X₄ bezeichneten Anschlüssen 11b jeweils ein Bremsbelagverschleißsensor 14 angeschlossen.

Zum Anschluss der Sensoren 12, 13, 14, weisen die Anschlüsse 11a, 11b im gezeigten Ausführungsbeispiel jeweils zwei elektrische Leiter 15 auf. Dementsprechend handelt es sich um ein Zweidrahtsystem zum Anschluss der entsprechenden Sensoren. Die Ansteuerung und Auswertung der Sensoren 12, 13, 14, kann dabei sowohl auf analoge als auch auf digitale Weise erfolgen. Gleichwohl wird typischerweise eine analoge Auswertung bevorzugt. Ebenso könnten prinzipiell auch Bussysteme an dieser Stelle eingesetzt werden. Da der Achsmodulator 10 jedoch die konkrete Auswertung vornimmt, wird eine direkte Ansteuerung ohne separate Adressierung auf einem Bus vorteilhaft sein.

Prinzipiell sind selbstverständlich auch andere als Zweidrahtsysteme möglich. Ein Kontakt dieser Sensoren 12, 13, 14 mit dem Achsmodulator 10 und eine Rückführung über die Karosserie ist ebenso denkbar wie ein Anschluss mit mehr als zwei Leitern 15.

Im Ergebnis ist ein einziger Typ von Achsmodulatoren 10 dazu geeignet, in unterschiedlichen Einbausituationen verwendet zu werden. Konkret werden Lagerhaltungskosten und Planungskosten reduziert, da Entscheidungen über die Wahl der konkreten Sensortypen 12, 13, 14 beziehungsweise des Achsmodulators 10 erst später im Prozess erfolgen muss, als wenn gemäß dem Stand der Technik unterschiedliche Typen von Achsmodulatoren 10 für passive oder aktive Drehzahlsensoren 12, 13 vorgesehen werden müssten. Die Anzahl der vorzuhaltenden Varianten von Achsmodulatoren 10 wird somit erfindungsgemäß reduziert.

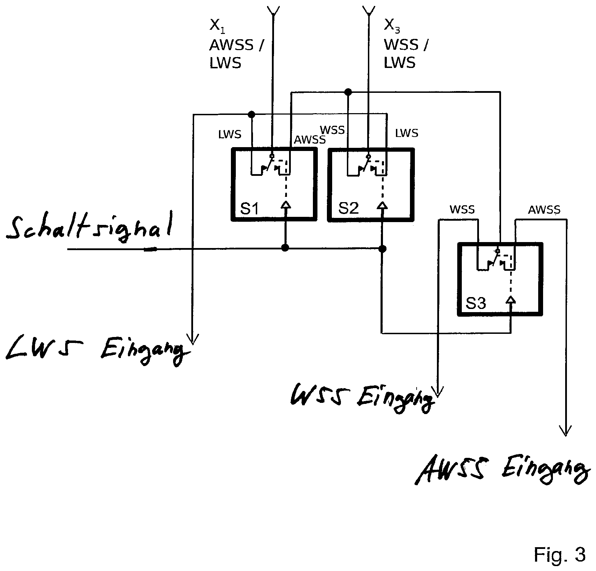

Die Fig. 3 zeigt ausschnittsweise ein Schaltungsbeispiel für einen erfindungsgemäßen Achsmodulator.

Darin sind die verschiedenen, in Betracht kommenden Sensortypen bezeichnet. Als LWS (Linear Wear Sensor) werden die Bremsbelagverschleißsensoren 14 bezeichnet. Aktive Drehzahlsensoren 13 werden als AWSS (Active Wheel Speed Sensor) und passive Drehzahlsensoren 12 als WSS (Wheel Speed Sensor) benannt.

Drei Umschalter S1, S2 und S3 sind vorgesehen. Die Anschlüsse X₁ und X₂ sind mit dem Schaltkontakt des ersten beziehungsweise zweiten Umschalters S1, S2 verbunden. Die jeweils beiden freien Kontakte sind dabei wechselweise entweder mit dem LWS Eingang ("To LWS Input Circuit") des Steuergeräts oder dem Schaltkontakt des dritten Umschalters S3 verbunden. Dieser dritte Umschalter S3 schaltet dann wechselweise aufgrund des Schaltsignals zwischen dem Eingang für passive Drehzahlsensoren WSS ("To WSS Input Circuit") und für aktive Drehzahlsensoren AWSS ("To AWSS Input Circuit") um.

Ein Schaltsignal ("Switch Signal") wirkt sich damit gleichzeitig auf die drei Umschalter S1, S2, S3.

Ein Umschalten des Anschlusses X₁ an S1 zwischen LWS und AWSS führt gleichzeitig zu einem Umschalten des Anschlusses X₃ an S2 zwischen WSS und LWS. Außerdem werden die Eingänge der Steuergeräts entsprechend durch S3 gleichzeitig umgeschaltet.

Das Schaltsignal für das Umschalten kann beispielsweise aufgrund eines Stecckontaktes als Kodierung der Sensoren, durch eine automatische Erkennung der Sensortypen oder auch durch manuelles Umlegen eines Schalters erzeugt werden.

## Patentansprüche

1. Achsmodulator zum Regeln des Bremszylinderdrucks auf beiden Seiten wenigstens einer Achse eines Fahrzeugs mit einer vorzugsweise pneumatischen Bremsanlage, wobei wenigstens ein Drehzahlsensor (12, 13) und wenigstens ein Bremsbelagverschleißsensor (14) zum Auslesen anschließbar sind, **dadurch gekennzeichnet, dass** separate Anschlüsse (11a, 11b) für aktive und passive Drehzahlsensoren (13; 12) vorgesehen sind, wobei aktive und passive Drehzahlsensoren (12; 13) alternativ zueinander anschließbar sind,
wobei wenigstens zwei erste Anschlüsse (11a) und zwei zweite Anschlüsse (11b) zum Anschließen von Sensoren für die beiden Seiten einer Achse vorgesehen sind, und dass entweder zwei aktive Drehzahlsensoren (13) an die ersten Anschlüsse (11a) und zwei Bremsbelagverschleißsensoren (14) an die zweiten Anschlüsse (11b) anschließbar sind, oder dass zwei Bremsbelagverschleißsensoren (15) an die ersten Anschlüsse (11a) und zwei passive Drehzahlsensoren (12) an die zweiten Anschlüsse (11b) anschließbar sind.

2. Achsmodulator nach einem der vorhergehenden Ansprüche, **dadurch gekennzeichnet, dass** für jede Achse zwei Anschlüsse (11a; 11b) für eine oder für jede Seite der Achse vorgesehen sind, wobei einer der Anschlüsse (11a; 11b) für passive Drehzahlsensoren (12) und einer der Anschlüsse (11a; 11b) für aktive Drehzahlsensoren (13) ausgebildet ist.

3. Achsmodulator nach einem der vorhergehenden Ansprüche, **dadurch gekennzeichnet, dass** jeder der Anschlüsse (11a; 11b) zwei Kontakte beziehungsweise zwei elektrische Leiter (15) zum Anschließen eines Sensors aufweist, vorzugsweise zum Anschließen eines Drehzahlsensors (12, 13) oder eines Bremsbelagverschleißsensors (14).

4. Bremssystem mit wenigstens einem Bremssteuergerät und mit wenigstens einem Achsmodulator (10) nach einem der Ansprüche 1 bis 3.

## Claims

1. An axle modulator for open-loop control of the brake cylinder pressure on both sides of at least one axle of a vehicle having a preferably pneumatic brake apparatus, wherein at least one RPM sensor (12, 13) and at least one brake lining wear sensor (14) can be readably connected, **characterized in that** separate connections (11a, 11b) for active and passive RPM sensors (13; 12) are provided, wherein active and passive RPM sensors (12; 13) can be connected to each other alternatively,
wherein at least two first connections (11a) and two second connections (11b) are provided for connecting sensors for the two sides of an axle, and **in that** either two active RPM sensors (13) can be connected to the first connections (11a) and two brake lining wear sensors (14) can be connected to the second connections (11b), or **in that** two brake lining wear sensors (15) can be connected to the first connections (11a) and two passive RPM sensors (12) can be connected to the second connections (11b) .

2. The axle modulator according to any of the foregoing claims, **characterized in that** for each axle two connections (11a; 11b) are provided for one or for each side of the axle, wherein one of the connections (11a; 11b) is configured for passive RPM sensors (12) and one of the connections (11a; 11b) is configured for active RPM sensors (13).

3. The axle modulator according to any of the foregoing claims, **characterized in that** each of the connections (11a; 11b) has two contacts or two electrical conductors (15) for connecting a sensor, preferably for connecting an RPM sensor (12, 13) or a brake lining wear sensor (14).

4. A braking system having at least one brake controller and at least one axle modulator (10) according to any of claims 1 to 3.

## Revendications

1. Modulateur d'essieu pour la régulation de la pression de cylindre de frein sur les deux faces d'au moins un essieu d'un véhicule avec une installation de freinage de préférence pneumatique, dans lequel au moins un capteur de vitesse de rotation (12, 13) et au moins un capteur d'usure de garniture de frein (14) peuvent être raccordés pour lecture, **caractérisé en ce que** des raccordements (11a, 11b) séparés pour des capteurs de vitesse de rotation (13 ; 12) actifs et passifs sont prévus, dans lequel les capteurs de vitesse de rotation (12 ; 13) actifs et passifs peuvent être raccordés alternativement les uns par rapport aux autres,
dans lequel au moins deux premiers raccordements (11a) et deux deuxièmes raccordements (11b) pour le raccordement de capteurs pour les deux faces d'un essieu sont prévus, et que soit deux capteurs de vitesse de rotation actifs (13) peuvent être raccordés aux premiers raccordements (11a) et deux capteurs d'usure de garniture de frein (14) aux deuxièmes raccordements (11b), soit que deux capteurs d'usure de garniture de frein (15) peuvent être raccordés aux premiers raccordements (11a) et deux capteurs de vitesse de rotation passifs (12) aux deuxièmes raccordements (11b).

2. Modulateur d'essieu selon l'une quelconque des revendications précédentes, **caractérisé en ce que** pour chaque essieu deux raccordements (11a ; 11b) pour une ou pour chaque face de l'essieu sont prévus, dans lequel un des raccordements (11a ; 11b) est réalisé pour les capteurs de vitesse de rotation passifs (12) et un des raccordements (11a ; 11b) pour les capteurs de vitesse de rotation actifs (13).

3. Modulateur d'essieu selon l'une quelconque des revendications précédentes, **caractérisé en ce que** chacun des raccordements (11a ; 11b) présente deux contacts ou deux conducteurs électriques (15) pour le raccordement d'un capteur, de préférence pour le raccordement d'un capteur de vitesse de rotation (12, 13) ou d'un capteur d'usure de garniture de frein (14) .

4. Système de freinage avec au moins un appareil de commande de freinage et avec au moins un modulateur d'essieu (10) selon l'une quelconque des revendications 1 à 3.
